Europäisches Patentamt

**European Patent Office**

**Office européen des brevets**

(19)

(11) Publication number: **0 112 026**
**A1**

(12) # EUROPEAN PATENT APPLICATION

(21) Application number: **83306821.6**

(22) Date of filing: **09.11.83**

(51) Int. Cl.³: **B 65 G 39/09**

(30) Priority: 10.11.82 ZA 825744

(43) Date of publication of application:
27.06.84 Bulletin 84/26

(84) Designated Contracting States:
DE FR GB IT

(71) Applicant: **Dorigo, Cesare**
**15 Benjamin Street**
**Robertsham Transvaal(ZA)**

(72) Inventor: **Dorigo, Cesare**
**15 Benjamin Street**
**Robertsham Transvaal(ZA)**

(74) Representative: **Skerrett, John Norton Haigh et al,**
**H.N. & W.S. SKERRETT Rutland House 148 Edmund**
**Street**
**Birmingham B3 2LQ(GB)**

(54) **Conveyor idler.**

(57) A conveyor idler roller has a tubular body (10) and an axial shaft (11) therethrough which is mounted by means of spaced bearings (15) so that the bearings are readily removable and replaceable. For this purpose the bearings (15) at each side of the roller body (10) are mounted on stub elements (12) which screw into the central shaft (11), with the bearings (15) nesting in pockets (14) in end plates (10a) in the roller body (10). Clip-on seals (17) enclose the end plates (10a) to seal bearings (15).

EP 0 112 026 A1

CONVEYOR IDLER

THIS invention relates to an idler roller suitable for supporting a conveyor belt.

Conventional idler rollers comprise a tubular body having an axial, rotatable, shaft which is adapted to mount the body in use. The shaft is rotatably mounted on the ends of the body by means of bearings which are secured to the body in permanent fashion by means of suitable bearing housings. A disadvantage with conventional roller assemblies is that upon failure of a bearing the entire assembly needs to be replaced, and repair thereof is time consuming and costly.

It is accordingly one of the objects of the present invention to provide a novel roller assembly which it is believed will have advantages over known arrangements.

According to the invention mounting means for removably mounting a bearing on a shaft comprises a stub element which is adapted to receive the bearing thereon and which is adapted to be removably secured to the shaft to form an axial extension thereof.

Preferably the stub element will define restraining means such as a collar, groove and circlip, cotter or the like to prevent movement of the bearing on the element towards and/or away from the shaft. In one arrangement permanent restraining means in the nature of a collar or the like will be provided to one side of the bearing, and removable restraining means such as a removable circlip, pin or the like to the other side of the bearing to permit the latter to be removed from the stub element when necessary.

Preferably also, the stub element will engage the shaft in spigot and socket fashion although variations are possible in this regard. In a preferred arrangement, the stub element will define a threaded spigot adapted to engage a complementary threaded socket on the shaft.

Also included within the scope of the invention is a roller assembly suitable for supporting a conveyor or the like comprising a body portion and an axial shaft extending through the body, the latter being relatively rotatably mounted towards the ends of the body by means of bearing elements, with at least one bearing element being mounted on the shaft through the mounting means substantially as disclosed herein. Preferably both bearings will be mounted on the shaft through such mounting means.

Further according to this aspect of the invention the body member is provided with end caps which define apertures for passage of the shaft, and concavities for receiving the bearing elements. Preferably the assembly will include sealing means adapted to enclose the bearings within the concavities such sealing means providing passage for the shaft therethrough.

Preferably the sealing means will be in the form of a disc which is adapted snugly to fit into the end of the roller member, preferably in clip on fashion, with the shaft being a snug fit through the passage in the disc. Preferably both the outer and inner peripheries of the disc will be provided with a transverse skirt formation for sealing purposes.

It is further intended to include within the scope of the invention a method of rotatably mounting an axial

3

shaft on a roller body member comprising the steps of mounting a first bearing on the shaft towards one end thereof passing the shaft axially through the body so that the bearing engages within a housing towards one end of the roller body, and mounting a second bearing towards the other end of the shaft by means of the mounting means substantially as disclosed herein, the arrangement being one wherein the length of the shaft is such that the second bearing also engages within a bearing housing at the other end of the body member when the stud element of the mounting means is secured to the shaft. Preferably the first bearing will also be mounted on the shaft by means of the mounting means of the invention

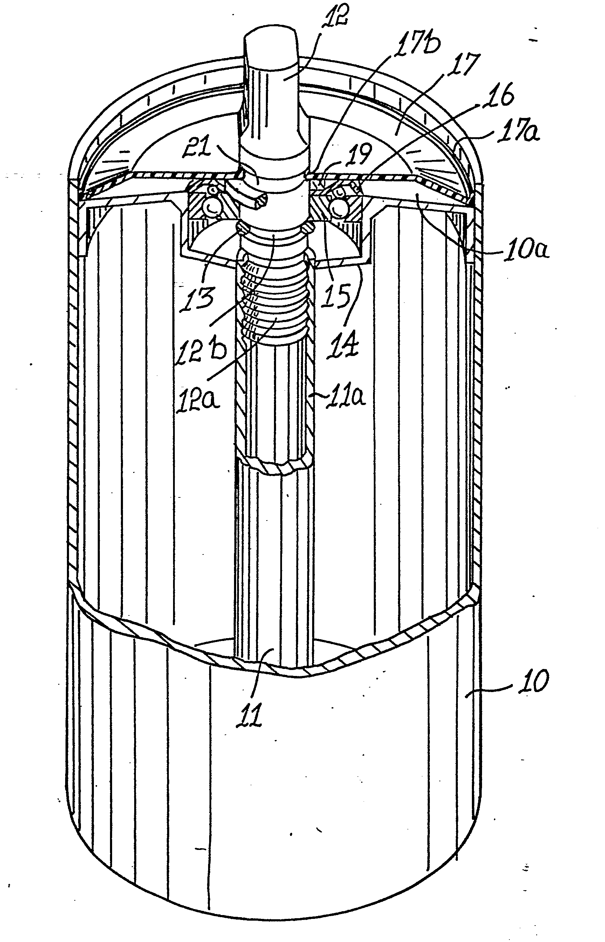

In order more clearly to illustrate the invention an embodiment thereof is described hereunder purely by way of example with reference to the accompanying drawing which is a partially sectioned perspective view of an idler roller which is adapted to support a conveyor belt.

With reference to the drawing, an idler roller comprises a tubular body member 10 of circular section and an axial relatively rotatable shaft 11 whereby the assembly is mounted on a support structure (not shown). Closure plates 10a are provided towards the ends of the roller body 10 and these define an axial aperture though which the shaft 11 may pass and a concavity 14 which is adapted snugly to receive a roller bearing 15. It is envisaged that the inner face of the concavity 14 will taper inwardly and be adapted to contain a lubricant such as grease. The closure plates 10a will preferably be a press-fit within the roller body 10 and be secured permanently in position by means of spot welds or the like.

It is a feature of the invention that bearing mounting means is provided for readily removing the bearing 15 from the shaft 11 and concavity 14. Such means comprises a stub element 12 which receives the bearing 15 removable thereon and which in turn is removably secured in axial relationship to the shaft 11. In the arrangement illustrated the stub element 12 engages the shaft 11 in spigot and socket fashion by means of a threaded spigot 12a on the element 12 and a complementary threaded socket 11a on the shaft 11. The bearing 15 on the other hand is held in position on the stub element 12 by means of a collar 19 which prevents movement of the bearing away from the shaft 11, and a removable clip element 13 which is disposed in a groove 12b in the stub element 12. Preferably a washer 16 will be disposed between the collar 19 and the bearing 15 and be shaped as illustrated to contain a lubricant such as grease.

Where a bearing 15 fails the arrangement of the invention permits ready replacement, simply by unscrewing the stub element 12 from the shaft 11 which then permits removal of the stub element 12 together with the bearing 15 from the roller body 10. The bearing 15 can thereafter be replaced and the reverse procedure adopted to remount the bearing within the concavity 14 of the roller body 10. Preferably both ends of the roller body 10 will be provided with the arrangement illustrated, but it will be appreciated that where only one end of the shaft is provided with a stub element 12, ready replacement of both bearings could still be effected, by first removing the stub element 12 on one side of the roller body 10, and then withdrawing the shaft 11 together with the other bearing from the other side of the roller body 10.

In a preferred arrangement a dust and water shield 17 through which the stub element 12 passes will be provided to enclose the bearing 15 in the manner illustrated. Preferably such shield will be a snug fit within the end part of the roller body 10 to enclose the closure plate and thus minimize the ingress of dirt and moisture. It is envisaged that the inner peripheral lip of the shield 17 will ride within a shallow groove 21 in the stub element 12 and be a snug fit in the groove. Preferably the shield 17 will engage the groove 21 and/or the roller body in clip-on fashion and it has been found that a shield in the form of a disc of polypropylene of about 0,5mm thickness has the desired degree of flexibility and resilience for this purpose and also has the required wearing properties. Preferably also the outer and inner peripheries of the disc will define transverse skirt formations 17a and 17b respectively for sealing purposes.

Clearly many variations of the invention exist without departing from the principles set out in the consistory clauses. For example, the extremity of the stub element 12 is shown as defining opposed flats for purposes of mounting the stub element on a support but clearly variations are possible in this regard.

CLAIMS

1.  Mounting means for removably mounting a bearing on a shaft comprising a stub element which is adapted to receive the bearing thereon and which is adapted to be secured removably to the shaft to form an axial extension thereof.

2.  Mounting means according to claim 1 wherein the stub element defines restraining means such as a collar, groove and circlip, cotter or the like to prevent movement of the bearing on the element toward and/or away from the shaft.

3.  Mounting means according to claim 2 wherein permanent restraining means in the nature of a collar or the like is provided to one side of the bearing, and removable restraining means such as removable circlip, pin or the like to the other side of the bearing to permit the latter to be removed from the stub element when necessary.

4.  Mounting means according to any one of claims 1 to 3 wherein the stub element engages the shaft in spigot and socket fashion.

5.  Mounting means according to claim 4 wherein the stub element defines a threaded spigot adapted to engage a complementary threaded socket on the shaft.

6.  Mounting means substantially as herein described with reference to the accompanying drawing.

7.  A roller assembly suitable for supporting a conveyor, belt or the like, comprising a body portion and an axial shaft extending through the body, the latter being relatively rotatably mounted towards the ends of the body by means of spaced bearing elements, with at least one bearing element being mounted on the shaft by the mounting means substantially as claimed in any one of claims 1 to 6.

8. A roller assembly according to claim 7 wherein both bearings are mounted on the shaft by the mounting means substantially as claimed in any one of claims 1 to 6.

9. A roller assembly according to claim 7 or claim 8 wherein the body member is provided with end caps which define apertures for the passage of the shaft, and concavities for receiving the bearing elements.

10. The roller assembly according to claim 7 including sealing means adapted to shield the bearings against ingress of foreign matter with the sealing means providing a passage for the shaft therethrough.

11. The roller assembly according to claim 10 wherein the sealing means is in the nature of a resilient disc which is a snug fit in the end of the body member, and which fits snugly onto the shaft.

12. The roller assembly according to claim 11 wherein the disc is of polypropylene and has a thickness of around 0,5mm.

13. The roller assembly according to any one of claims 10 to 12 wherein the sealing means is provided with a transverse skirt formation at its inner and outer peripheries where it engages the shaft and the roller member respectively.

14. A method of rotatably mounting an axially disposed shaft on a roller body member comprising the steps of mounting a first bearing on the shaft towards one end thereof, passing the shaft axially through the body so that the bearing engages within a housing towards one end of the roller body, and mounting a second bearing toward the other end of the shaft by means of the mounting means substantially as claimed in any one of claims 1 to 6, the arrangement being one wherein the length of the shaft is such that the second bearing also engages within a bearing housing at the other end of the body member when the stub element of the mounting means is secured to the shaft.

15. The method according to claim 14 wherein the first bearing is mounted on the shaft by means of the mounting means substantially as claimed in any one of claims 1 to 6.

## DOCUMENTS CONSIDERED TO BE RELEVANT

EP 83306821.6

| Category | Citation of document with indication, where appropriate, of relevant passages | Relevant to claim | CLASSIFICATION OF THE APPLICATION (Int. Cl. ³) |
|---|---|---|---|
| X | AT – B – 331 183 (MASYC AG) | 1,14 | B 65 G 39/09 |
| A | * Fig. 7 * | 7,9 | |
| | -- | | |
| X | US – A – 1 425 561 (WEGO) | 1,14 | |
| A | * Fig. 1 * | 7,9,10 | |
| | -- | | |
| X | US – A – 1 351 481 (LISTER) | 1,14 | |
| A | * Fig. 1 * | 7 | |
| | -- | | |
| X | US – A – 1 362 910 (ZOELLER) | 1,14 | |
| A | * Fig. 2 * | 2,3,7 | |
| | ---- | | |
| | | | **TECHNICAL FIELDS SEARCHED (Int. Cl. ³)** |
| | | | B 65 G 39/00 |

The present search report has been drawn up for all claims

| Place of search | Date of completion of the search | Examiner |
|---|---|---|
| VIENNA | 02-03-1984 | PISSENBERGER |